# EUROPÄISCHE PATENTSCHRIFT

(11) **EP 3 530 505 B1**
(45) Veröffentlichungstag und Bekanntmachung des Hinweises auf die Patenterteilung: **11.03.2020**
(21) Anmeldenummer: 18212464.4
(22) Anmeldetag: 13.12.2018
(51) Int. Cl.: B60H 1/34, F24F 13/14

(54) **LUFTAUSSTRÖMER**
AIR VENT
DISPOSITIF D'ÉCOULEMENT D'AIR

(30) Priorität: 07.02.2018 DE 102018102759; 26.04.2018 DE 102018110093
(43) Veröffentlichungstag der Anmeldung: 28.08.2019
(73) Patentinhaber: Dr. Schneider Kunststoffwerke GmbH, 96317 Kronach-Neuses (DE)
(72) Erfinder: Shaik, Shabbeer, 95448 Bayreuth (DE); Schwarz, Josef, 96317 Kronach (DE)

(56) Entgegenhaltungen:
- DE-A1- 4 136 822
- DE-A1-102017 111 011
- FR-A1- 3 043 449
- US-A1- 2013 029 582

## Beschreibung

Es wird ein Luftausströmer beschrieben, der ein Gehäuse mit einer Lufteintrittsöffnung und einer Luftaustrittsöffnung, ein im Gehäuse drehbar gelagertes Luftleitelement, eine erste Gruppe von Lamellen und eine zweite Gruppe von Lamellen aufweist.

Luftausströmer dienen zum Ausgeben von Luft, die von einer Klimaanlage oder einer anderen Belüftungseinrichtung zugeführt wird. Zusätzlich kann über Luftausströmer eine Ablenkung der ausgegebenen Luft erreicht werden. In Fahrzeugen werden Luftausströmer eingesetzt, um Frischluft, temperierte Luft und/oder klimatisierte Luft in den Fahrgastraum eines Fahrzeugs zu bringen. Fahrzeuge können beispielsweise Kraftfahrzeuge wie Pkw, Lkw oder Busse, Züge, Flugzeuge oder Schiffe sein.

Bei Luftausströmern kann oftmals neben der Steuerung der Ablenkung von ausgegebener Luft auch die Menge an ausgegebener Luft geregelt werden. Hierzu wird die Menge der in den Luftausströmer geleiteten Luft über eine Steuereinrichtung geregelt, die mit einer Bedieneinrichtung zum Ablenken des Luftstroms oder getrennt von einer solchen Bedieneinrichtung angeordnet ist. Eine solche Bedieneinrichtung kann beispielsweise im Bereich einer Ausströmöffnung vorgesehen sein.

Luftausströmer in Kraftfahrzeugen können in einem Fahrzeugarmaturenbrett oder im Bereich der A-, B- oder C-Säule oder am Dach sowie an weiteren Stellen im Fahrzeug angeordnet sein.

### Stand der Technik

Konventionelle Luftausströmer mit einer sehr geringen Ausströmhöhe gegenüber ihrer Ausströmbreite (und umgekehrt) weisen beispielsweise Ei-förmige Luftleitelemente auf, die in einem Luftkanalabschnitt gelagert sind, der zwischen dem Luftleitelement und den gegenüberliegenden Wandabschnitten Luftkanäle ausbildet. Diesen Luftkanälen kann wechselweise oder gemeinsam Luft zugeführt werden, wobei das Zuführen von Luft in einen der Bereiche aufgrund der Krümmung und Ausgestaltung des Gehäuses sowie des Luftleitelementes eine Luftablenkung bewirkt.

Um eine zusätzliche seitliche Luftablenkung zu erreichen, sind dem Luftleitelement in Luftströmungsrichtung vorgelagerte Lamellen vorgesehen. Ein derartiger Luftausströmer ist beispielsweise in DE 10 2013 210 055 B3 beschrieben.

Ein solcher Luftausströmer weist jedoch verschiedene Nachteile auf. Zum einen ist die seitliche Luftablenkung über die in Luftströmungsrichtung vorgelagerten Lamellen unzureichend. Die ausgegebene Luft kann über die Lamellen nur in einem sehr beschränkten Umfang seitlich abgelenkt werden. Zudem benötigt der Luftausströmer einen relativ großen Bauraum. Der Bauraum ergibt sich zum einen aus den in Luftströmungsrichtung vorgelagerten Lamellen und zum anderen durch eine zusätzliche Schließklappe als Drosseleinrichtung, welche den Lamellen ebenfalls in Strömungsrichtung vorgelagert ist. Daher ist zusätzlicher Bauraum im Bereich eines Luftkanals, in dem die Drosseleinrichtung und die Lamellen angeordnet sind, erforderlich.

Der Luftausströmer von DE 10 2013 210 055 B3 weist zusätzlich einen rückseitigen, der Lufteintrittsöffnung zugewandten Flügel auf, der schwenkbeweglich am Luftleitelement angeordnet und über eine Bedieneinrichtung verschwenkbar ist. Die Hebelanordnung zum Verschwenken des Flügels benötigt ebenfalls einen bestimmten Bauraum. Das Luftleitelement muss daher eine gewisse Mindesthöhe aufweisen. Diese Mindesthöhe erfordert daher auch eine Mindesthöhe des Gehäuses des Luftausströmers, damit ein ausreichend großer Luftstrom zwischen dem Luftleitelement und den gegenüberliegenden Gehäusewänden möglich ist.

Darüber hinaus weist der Luftausströmer von DE 10 2013 210 055 B3 eine Vielzahl von Komponenten auf, die über komplexe Kinematiken miteinander gekoppelt sind. Der Luftausströmer ist daher sowohl aufwendig und kostenintensiv, als auch störungsanfällig. Dabei ist die Luftablenkung orthogonal zur Luftablenkung über das Luftleitelement nur in eingeschränkter Weise möglich.

FR 3 043 449 A1 offenbart einen Luftausströmer, bestehend aus einem Gehäuse, in dem ein Luftleitelement schwenkbeweglich gelagert ist. Am Luftleitelement angeformte Schalen sind der Form des Gehäuses nachempfunden und gleiten beim Verschwenken des Luftleitelements im Wesentlichen über dessen Innenfläche. Die Lagerung des Luftleitelement erfolgt über einen Steg, der am Gehäuse angeformt und dem Luftleitelement in Luftströmungsrichtung vorgelagert ist. In dem Luftleitelement sind wiederum verschwenkbare Lamellen angeordnet. Durch Verschwenken des Luftleitelements erfolgt über die Lamellen und die Schalen eine Ablenkung des Luftstroms.

US 2013 0 029 582 A1 und DE 41 36 822 A1 offenbaren jeweils einen Luftausströmer mit einem zylindrischen Luftleitkörper, der an der Luftauslassöffnung in einem Gehäuse drehbar gelagert ist. Die Gehäusewände sind in diesem Bereich ebenfalls zylindrisch ausgestaltet und umfasst den zylindrischen Luftleitkörper. In dem Luftleitkörper sind Lamellen parallel zu dessen Mittelachse angeformt und luftauslassseitig angeordnet; die beiden äußeren Lamellen sind Bestandteil der Mantelwand des zylindrischen Luftleitkörpers. Beim Verdrehen des Luftleitkörpers innerhalb des zylindrisch geformten Gehäuseteils lässt so sich der ausströmende Luftstrom in seiner Richtung verstellen. Die maximale Neigung des zylindrischen Luftleitkörpers ist erreicht, sobald eine der beiden äußeren Lamellen das zuluftseitige Ende der zylindrischen Gehäusewölbung erreicht. D3 verfügt darüber hinaus über eine am Luftauslass angeordnete feststehende Blende mit Stegen, welche schlitzartige Luftausströmöffnungen bilden, die mit den Lamellen des zylindrischen Luftleitkörpers korrespondieren.

DE 10 2017 111 011 A1 zeigt einen Luftausströmer mit einem Gehäuse, das zylindrisch ausgeformte Wände im Bereich des Luftauslasses aufweist. Innerhalb des zylindrischen Gehäusebereichs befindet sich ein Luftleitelement mit zu den zylindrischen Wänden gleichartig gekrümmten Oberflächen. Durch das Luftleitelement wird der Luftkanal aufgeteilt in einen oberen und einen unteren Luftkanal. In diesen beiden Luftkanälen sind quer zur Mittelachse des zylindrischen Gehäusebereichs Lamellen angeordnet. Zuluftseitig befinden sich gegenüberliegend an den Gehäusewänden vor dem zylindrischen Gehäusebereich zwei Klappen, welche ihre Drehachsen an der Gehäusewand haben und sich in einer Nichtgebrauchsstellung im Wesentlichen die Gehäusewand anschmiegen. Der in den Luftausströmer eintretende Luftstrom umströmt dann das Luftleitelement beidseitig. Die Luftablenkung erfolgt, indem jeweils eine Klappe in den Luftstrom verschwenkt und dadurch teilweise bis vollständig jeweils einer der beiden Kanäle verschlossen wird. Der Luftstrom umströmt sodann das Luftleitelement im noch geöffneten anderen Luftkanal und tritt durch die zylindrisch ausgestaltete Gehäusewand schräg gerichtet aus.

### Aufgabe

Demgegenüber besteht die Aufgabe der Erfindung darin, einen Luftausströmer anzugeben, der einen sehr einfachen Aufbau aufweist, wobei der Luftausströmer nur einen geringen Bauraum benötigt und auch eine hohe Luftablenkung seitlich zu einer Luftablenkung über ein zentrales Luftleitelement bereitstellt. Zudem soll eine alternative Lösung zu den aus dem Stand der Technik bekannten Luftausströmern angegeben werden.

### Lösung

Die vorstehend genannte Aufgabe wird erfindungsgemäß durch einen Luftausströmer gemäß dem unabhängigen Anspruchs 1 gelöst. Vorteilhafte Ausgestaltungen der Erfindung ergeben sich aus den Unteransprüchen.

Die Lamellen sind gegenüberliegend an dem Luftleitelement gelagert, sodass bei einem Verschwenken des Luftleitelements die Lamellen mitbewegt werden. Dies hat mehrere Vorteile. Zum einen erfolgt die seitliche Luftablenkung im Bereich des Luftleitelements und ist daher stärker ausgeprägt als bei Lamellen, die in Luftströmungsrichtung einem Luftleitelement vorgelagert sind. Zudem wird bei einem Verschwenken des Luftleitelements die Gruppe von Lamellen weiter in Richtung der Luftaustrittsöffnung verlagert, über welche ein Luftstrom geführt wird.

Um einen Luftstrom in einen der zwischen dem Luftleitelement und den gegenüberliegenden Wandabschnitten gebildeten Luftkanäle zu führen, sind die Klappen angeordnet. Die Klappen ermöglichen es, einen Teilluftstrom über einen der Luftkanäle vollständig oder nur bereichsweise zu drosseln bzw. zu unterbinden. Die Drosselung des Luftstroms über einen Luftkanal erfolgt in Abhängigkeit der Stellung des Luftleitelements und damit der Position der Lamellen. Da die Lamellen direkt am Luftleitelement drehbar gelagert sind, ergibt sich deren Position und damit die seitliche Luftablenkung auch in Abhängigkeit der Stellung des Luftleitelements. Die Gruppe von Lamellen, die durch das verschwenkte Luftleitelement näher an der Luftaustrittsöffnung angeordnet ist, bewirkt eine stärkere Luftablenkung als die gegenüberliegenden Lamellen, die beispielsweise nach hinten in Richtung der Lufteintrittsöffnung verschwenkt wurden. Zudem kann der Luftkanal in Abhängigkeit der Stellung des Luftleitelements über eine Klappe im Wesentlichen auch vollständig verschlossen werden. Es kann jedoch zwischen den Klappen und dem Luftleitelement auch in den vollständig verschlossenen bzw. gedrosselten Stellungen ein Abstand zwischen einer Kante der Klappe und dem Luftleitelement bestehen, um Geräusche zu minimieren oder auszuschließen. Geringe Luftströme sind tolerierbar und haben im Wesentlichen keinen Einfluss auf die Luftablenkung. Derart geringe Teilluftströme beeinflussen den Hauptluftstrom nicht und sind daher zu vernachlässigen.

Als weiteres wesentliches Merkmal sind die Klappen verschwenkbar an den gegenüberliegenden Wandabschnitten gelagert. Die Klappen sind gefedert gelagert und ragen daher in den Teilluftkanal zwischen dem Wandabschnitt und dem Luftleitelement hinein, wenn sich im Bereich der Klappen keine Lamellen befinden. In einer Neutralstellung des Luftleitelements werden die gegenüberliegenden Klappen durch die Lamellen gegen die Wandabschnitte gedrückt, sodass die Teilluftströme zwischen dem Luftleitelement und den Wandabschnitten des Gehäuses gleich groß und entsprechend stark sind, da die Luftkanäle nicht versperrt werden. Wird nun das Luftleitelement verschwenkt, so drücken die Lamellen einer Gruppe von Lamellen weiterhin gegen eine der Klappen, wobei die andere Gruppe der Lamellen nach hinten verlagert wird und dadurch ein Verschwenken der entsprechenden Klappe (entsprechend der Position der Lamellen) zulässt. Die Klappe versperrt damit den Luftstrom über diesen Teilluftkanal. Hierüber wird der Luftstrom über den anderen Teilluftkanal verstärkt und es wird eine bessere Luftablenkung erzielt. Zudem befinden sich die Lamellen im vorderen Bereich des Luftausströmers, sodass die seitliche Luftablenkung stark ausgeprägt ist und bei entsprechend verschwenkten Lamellen eine seitliche Luftablenkung zusätzlich zu einer Luftablenkung über das Luftleitelement erreicht werden kann.

Zum Verschwenken der Lamellen kann das Luftleitelement mit einem Bedienelement versehen sein, das beispielsweise im Inneren des Luftleitelements über entsprechende Koppelglieder ein Verschwenken der Lamellen gemeinsam bewirkt. Die Koppelglieder müssen jedoch nur längs des Luftleitelements bewegt werden, so dass die Höhe des Luftleitelements aufgrund der Koppelglieder nicht vergrößert werden muss, wie dies im Stand der Technik erforderlich ist.

Die gegenüberliegenden Wandabschnitte können Aufnahmen für die Klappen aufweisen. Dadurch können die Klappen in ihrer vollständig verschwenkten Stellung über die Lamellen in diesen Aufnahmen aufgenommen sein, sodass keine Kanten gebildet werden, welche durchströmende Luft ablenken oder zu störenden Geräuschen führen können.

In weiteren Ausführungsformen können die Klappen über eine Feder vorgespannt sein. Als Federn können beispielsweise Schenkelfedern vorgesehen sein, die im Bereich der Lagerachsen der Klappen vorgesehen und angeordnet sind. Zudem können auch andere Federn vorgesehen sein, die abseits der Schwenkachsen der Klappen bestrebt sind, die Klappen in den Luftkanal zu drücken. Federeinrichtungen können auch durch ein Filmscharnier und eine entsprechende Auswahl der Komponenten gebildet werden.

Bei Filmscharnieren wird ein Luftdurchtritt im Bereich der Verbindungsstelle zwischen den Wandabschnitten und den Klappen verhindert. In alternativen Ausführungsformen ohne ein solches Filmscharnier können auch flexible Elemente den Verbindungsbereich überdecken, sodass ein Luftstrom zwischen den Klappen und der Gehäusewand ausgeschlossen wird.

Die Schwenkachsen der Klappen können im Wesentlichen auf Höhe der Drehachse des Luftleitelements liegen. Die Schwenkachsen der Klappen und die Drehachse des Luftleitelements befinden sich dabei im Wesentlichen in einer Ebene, die senkrecht durch das Gehäuse des Luftausströmers verläuft. Die Schwenkachsen der Lamellen können sich ebenfalls in einer Neutralstellung auf Höhe der Schwenkachse der Klappen und der Drehachse des Luftleitelements befinden, wobei die Lamellen um orthogonal zur Drehachse des Luftleitelements verlaufende Achsen verschwenkbar sind. Die Gestalt und Form der Lamellen ist dabei in Abhängigkeit der Anordnung der Klappen auszubilden. Zudem sind auch die Klappen in Abhängigkeit der Ausbildung und Form der Lamellen sowie der Größe der Luftkanäle zwischen dem Luftleitelement und den Wandabschnitten auszubilden.

Die Lamellen der ersten Gruppe von Lamellen und die Lamellen der zweiten Gruppe von Lamellen und/oder die Klappen können eine dem Verlauf der Wandabschnitte angepasste Form aufweisen. Vorzugsweise weisen die Klappen die gleiche Krümmung auf, wie die Wandabschnitte in den entsprechenden Bereichen. Die Lamellen weisen dann an ihrer äußeren, dem Luftleitelement abgewandten Kante eine entsprechende Krümmung auf, sodass das Luftleitelement verschwenkt werden kann und im Wesentlichen in sämtlichen Stellungen des Luftleitelements der Abstand zwischen dieser Kante der Lamellen und den Wandabschnitten des Gehäuses gleich groß ist. Die Länge bzw. Form der Lamellen an den Abschnitten, die in Anlage mit den Klappen kommen, ist entsprechend der Anordnung der Schwenk- bzw. Drehachsen sowie der gesamten Dimensionierung und Ausgestaltung des Luftausströmers anzupassen. Wesentlich ist dabei, dass durch das Verschwenken des Luftleitelements eine Verlagerung einer der Klappen erfolgen kann, um einen entsprechenden Teilluftstrom zu drosseln, damit die Luftzufuhr im anderen Teilluftkanal größer ist und damit eine stärkere Luftablenkung erreicht werden kann.

Die Klappen können über die Lamellen der ersten Gruppe von Lamellen und die Lamellen der zweiten Gruppe von Lamellen in Richtung der Luftaustrittsöffnung verschwenkbar sein. Die Klappen werden daher nach "vorne" verschwenkt. Dadurch ist in gedrosselten Zwischenstellungen, wobei die Klappen nur teilweise in den Luftkanal zwischen dem Wandabschnitt und dem Luftleitelement ragen, eine zusätzliche Luftablenkung in Richtung des Luftleitelements gegeben. Hierdurch kann die Luftablenkung weiter unterstützt werden.

In weiteren Ausführungsformen kann das Luftleitelement keulenförmig oder walzenförmig ausgebildet sein. Das Luftleitelement weist dabei einen im Wesentlichen zylinderförmigen Körper auf, der im Wesentlichen mittig im Luftkanal angeordnet ist. Am zylinderförmigen Körper sind die Lamellen verschwenkbar gelagert. Ein flach abfallender Abschnitt eines keulenförmigen Luftleitelements ragt in Richtung der Luftaustrittsöffnung und kann als zusätzliche Luftablenkfläche dienen. Zudem kann über eine solche Ablenkfläche ein Verschwenken des Luftausströmers erfolgen.

Das Luftleitelement kann einen über die Luftaustrittsöffnung zugänglichen Griff aufweisen. Der Griff dient zum Verschwenken des Luftleitelements. An dem Griff kann zusätzlich noch ein Bedienelement angeordnet sein, dass über eine in dem Luftleitelement gelagerte Kinematik mit den Lamellen gekoppelt ist, sodass ein Betätigen des Bedienelements ein Verschwenken der Lamellen zur seitlichen Luftablenkung bewirkt.

In weiteren Ausführungsformen kann sich der Griff über die Länge des Luftleitelements hinweg erstrecken und als Luftleitfläche ausgebildet sein. Die Luftleitfläche unterstützt die Luftablenkung und kann in maximalen verschwenkten Stellungen, wobei die Luftleitfläche an Kanten im Bereich der Luftaustrittsöffnung anliegt, sowohl den Blick auf die hinter den versperrten Teilluftkanal gelagerten Komponenten versperren als auch eine zusätzliche Absperrung des Teilluftkanals bewirken.

In noch weiteren Ausführungsformen kann im Bereich der Lufteintrittsöffnung des Gehäuses eine Drosseleinrichtung angeordnet sein, welche zwei verschwenkbare Drosselklappen aufweist, die zum Verschließen der Lufteintrittsöffnung bis in Berührungsanlage gegeneinander bewegbar und zum Öffnen der Lufteintrittsöffnung voneinander wegbewegbar sind. Die Drosselklappen können an den gekrümmten Wandabschnitten des Gehäuses verlagerbar sein, wobei diese zum Drosseln des Luftstroms aufeinander zubewegt werden. Hierdurch wird ein gerichteter Luftstrom bereitgestellt, wobei in gedrosselten Stellungen keine zusätzliche Luftablenkung über die Drosselklappen selbst erfolgt. Die Weite der Lufteintrittsöffnung lässt sich daher kontinuierlich verändern, wobei die zugeführte Luft im Wesentlichen in die Mitte des Luftausströmergehäuse geführt wird. Die Drosselklappen können hierzu um eine mit der Drehachse des Luftleitelements koaxial verlaufende Schwenkachse verschwenkbar sein. Die Drosseleinrichtung benötigt daher wenig Bauraum und ermöglicht zudem eine verbesserte Steuerung der Menge an zugeführter Luft.

Die Komponenten des Luftausströmers können beispielsweise aus Kunststoff gefertigt werden und sind daher in hoher Stückzahl kostengünstig herzustellen. Als Material für die Komponenten des Luftausströmers können insbesondere solche verwendet werden, die sich leicht recyceln lassen.

Zusätzlich können im Bereich des Luftausströmers oder an Komponenten Leuchtelemente (z.B. LEDs) oder beleuchtbare Bereiche vorgesehen und ausgebildet sein. Hierbei kann das Luftleitelement zumindest abschnittsweise aus einem durchleutchtbaren Kunststoff bestehen. Ferner können Lichtleiter im Luftausströmer angeordnet sein, die eine Einkopplung von Licht in verschiedene Bereiche des Luftausströmers ermöglichen.

Der erfindungsgemäße Luftausströmer weist einen sehr einfachen Aufbau auf und ermöglicht eine Drosselung der Teilluftströme über die Klappen durch ein Verschwenken des Luftleitelements. Zusätzlich ist die seitliche Luftablenkung deutlich verbessert, da sich die Lamellen im Bereich des Luftleitelements befinden.

Weitere Vorteile, Merkmale sowie Ausgestaltungsmöglichkeiten ergeben sich aus der nachfolgenden Figurenbeschreibung von nicht einschränkend zu verstehenden Ausführungsbeispielen.

### Kurzbeschreibung der Figuren

In den Zeichnungen zeigt:
- Fig. 1: eine schematische Darstellung eines Luftausströmers mit gefederten Klappen; und
- Fig. 2: eine weitere schematische Darstellung des Luftausströmers mit einem verschwenkten Luftleitelement und einer geschlossenen Lufteintrittsöffnung.

In den Zeichnungen mit gleichen Bezugszeichen versehene Bestandteile entsprechen im Wesentlichen einander, sofern nichts angegeben ist. Darüber hinaus wird darauf verzichtet, Bestandteile zu beschreiben und zu zeigen, welche nicht Wesentlich zum Verständnis der hierin offenbarten technischen Lehre sind.

### Ausführliche Beschreibung eines Ausführungsbeispiels

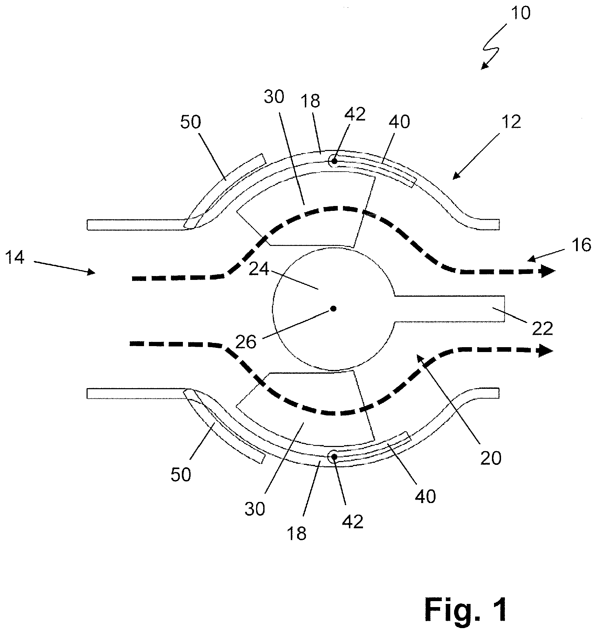

Fig. 1 zeigt eine schematische Darstellung eines Luftausströmers 10 mit gefederten Klappen 40. Der Luftausströmer 10 ist in einem Fahrzeug im Bereich eines Armaturenbretts oder im Bereich der A-, B- oder C-Säule angeordnet. Der Luftausströmer 10 kann auch an anderen Stellen in einem Fahrzeug, beispielsweise in einem Pkw, angeordnet sein. Die Anordnung des Luftausströmers 10 ist derart gewählt, dass sich der Luftausströmer 10 in Längsrichtung erstreckt und somit als Fugenausströmer dient. Darüber hinaus kann der Luftausströmer 10 auch anderweitig ausgerichtet angeordnet werden, sodass sich die Luftaustrittsöffnung 16 nach oben erstreckt. Auch eine schräge Anordnung des Luftausströmers 10 ist möglich.

Der Luftausströmer 10 weist ein Gehäuse 12 auf. Das Gehäuse 12 weist einen zylinderförmigen Abschnitt auf, der durch die gegenüberliegenden gekrümmten Wandabschnitte 18 gebildet ist. Im zylinderförmigen Bereich des Luftkanals ist ein Luftleitelement 20 verschwenkbar gelagert. Das Luftleitelement 20 erstreckt sich im Wesentlichen über die gesamte Breite der Luftaustrittsöffnung 16. Die Drehachse 26 des Luftleitelements 20 verläuft im Wesentlichen mittig durch das Gehäuse 12 bzw. den zylinderförmigen Abschnitt.

Das Gehäuse 12 weist eine Lufteintrittsöffnung 14 und eine Luftaustrittsöffnung 16 auf. Die Lufteintrittsöffnung 14 befindet sich in Luftströmungsrichtung dem Luftleitelement 20 vorgelagert. Im Bereich der Lufteintrittsöffnung 14 befindet sich ein Anschluss an einen Luftkanal. Über den Luftkanal wird temperierte und klimatisierte Luft von einer Klimaanlage zugeführt. Über die Luftaustrittsöffnung 16 wird die zugeführte und über das Luftleitelement 20 und Lamellen 30 abgelenkte Luft ausgegeben.

Im Bereich der Luftaustrittsöffnung 16 gehen die Wandabschnitte 18 in einen geradlinig ausgebildeten Bereich über, sodass die ausgegebene Luft keine zusätzliche Ablenkung durch die Wandabschnitte im Bereich der Luftaustrittsöffnung 16 erfährt. In alternativen Ausführungsformen kann im Bereich der Luftaustrittsöffnung 16 eine gekrümmte Ausbildung der Wandabschnitte vorgesehen sein, sodass eine Unterstützung der Luftablenkung erreicht wird. Die Luftablenkung kann unter Ausnutzung des Coanda-Effekts erreicht werden.

Das Luftleitelement 20 weist einen vorderen Griff 22 auf, der als Luftleitfläche ausgebildet ist. Das bedeutet, dass sich der Griff 22 über die gesamte Breite des Luftleitelements 20 erstreckt. Das Luftleitelement 20 weist zudem den walzenförmigen Abschnitt 24 auf, der mit dem Griff 22 verbunden ist. Die Drehachse 26 verläuft mittig durch den walzenförmigen Abschnitt 24.

Am vorderen, der Luftaustrittsöffnung 16 zugewandten Ende des Griffs 22 ist ein in den Figuren nicht dargestelltes Bedienelement verschiebbar gelagert, wobei ein Verschieben des Bedienelements entlang des Griffs 22 ein Verschwenken der Lamellen 30 bewirkt.

An dem Luftleitelement 20 sind am walzenförmigen Abschnitt 24 eine erste Gruppe von Lamellen 30 und eine zweite Gruppe von Lamellen 30 angeordnet. Die Lamellen 30 der ersten Gruppe von Lamellen und die Lamellen 30 der zweiten Gruppe von Lamellen sind gegenüberliegend angeordnet. Die Lamellen 30 können jeweils eine separate Schwenkachse aufweisen, über welche diese mit dem walzenförmigen Abschnitt 24 verbunden und drehbar gelagert sind. In weiteren Ausführungen können die Lamellen 30 eine gemeinsame Lagerachse aufweisen, die durch den walzenförmigen Abschnitt 24 verläuft, wobei ein Paar gegenüberliegender Lamellen 30 hierüber miteinander verbunden ist. Zum Verschwenken der Lamellen 30 ist das in den Figuren nicht dargestellte Bedienelement über eine entsprechende Mechanik mit den Lamellen 30 gekoppelt. Die Lamellen 30 können hierzu einen Koppelzapfen aufweisen, der mit der Mechanik zum Verschwenken gekoppelt ist. In weiteren Ausführungsformen kann das Bedienelement auch über eine Mechanik auf die Dreh- bzw. Lagerachse der Lamellen 30 einwirken. Die Lamellen 30 können auch jeweils über Koppelstangen miteinander gekoppelt sein, sodass ein gemeinsames Verschwenken der Lamellen 30 erfolgt.

An den Wandabschnitten 18 sind zudem Klappen 40 angeordnet, welche um Schwenkachsen 42 verschwenkbar gelagert sind. Die Klappen 40 sind über eine Federeinrichtung, die im Bereich der Schwenkachse 42 auf die Klappen 40 wirkt, an den Wandabschnitten 18 gelagert. Die Wandabschnitte 18 können Aufnahmen für die Klappen 40 aufweisen, sodass in der in Fig. 1 gezeigten Neutralstellung die Klappen 40 zumindest teilweise in den Wandabschnitten 18 aufgenommen sind und nicht (weit) in den Luftkanal hineinragen. Die Klappen 40 weisen eine Krümmung auf, die im Wesentlichen der Krümmung der Wandabschnitte 18 entspricht. Zudem erstrecken sich die Klappen 40 über die Bereite bzw. Länge des Luftleitelements 20 und sind vorzugsweise so ausgebildet, dass diese sich über die gesamte Breite des Luftkanals erstrecken. Die Klappen 40 werden über die Lamellen 30 gegen die Kraft der Feder in die Aufnahmen der Wandabschnitte 18 oder gegen die Wandabschnitte 18 gedrückt. Zwischen dem Luftleitelement 20 und insbesondere dem walzenförmigen Abschnitt 24 und den gegenüberliegenden Wandabschnitten 18 werden Teilluftkanäle gebildet.

Der Luftausströmer 10 weist eine Drosseleinrichtung 50 auf, die zwei verschwenkbar gelagerte Drosselklappen 50 umfasst. Die Drosselklappen 50 sind um eine Drehachse gelagert, die im Wesentlichen koaxial zur Drehachse 26 verläuft. Hierzu können an den gegenüberliegenden Wandbereichen des Gehäuses 12, die sich im Wesentlichen orthogonal zu den Wandabschnitten 18 erstrecken, Schwenkarme vorgesehen sein. Die Schwenkarme der Drosselklappen 50 können mit einer Einrichtung versehen sein, die eine Zwangskopplung der Drosselklappen 50 bewirkt. Die Zwangskopplung ist derart ausgebildet, dass die Drosselklappen 50 stets gemeinsam verschwenkt werden. In Fig. 1 ist eine vollständig geöffnete Lufteintrittsöffnung 14 gezeigt. Eine Betätigung der Drosseleinrichtung bewirkt dann ein Aufeinanderzubewegen der Drosselklappen 50, wobei der Abstand der Drosselklappen 50 zueinander bzw. die Öffnungsweite der Lufteintrittsöffnung 14 abnimmt. Die Drosselklappen 50 können beispielsweise über ein Bedienrad, das sich im Bereich der Luftaustrittsöffnung 16 befindet, gesteuert werden. Dadurch, dass die Drosselklappen 50 aufeinander zubewegt werden, wird der Luftstrom über die Lufteintrittsöffnung 14 immer mittig zugeführt und es erfolgt keine Luftablenkung über die Drosseleinrichtung.

Die Komponenten des Luftausströmers 10, insbesondere das Gehäuse 12, das Luftleitelement 20, die Lamellen 30, die Klappen 40 und die Drosselklappen 50 können aus Kunststoff bestehen und in einem Spritzgussprozess in hoher Stückzahl kostengünstig und schnell hergestellt werden. Der Luftausströmer 10 weist nur eine geringe Anzahl an Komponenten auf, wodurch der benötigte Bauraum gering ist. Weiterhin befinden sich die Lamellen 30 auf Höhe des walzenförmigen Abschnitts 24. Dadurch kann eine bessere seitliche Luftablenkung erreicht werden. Das Absperren eines der Teilluftkanäle bzw. die Drosselung der über die Teilluftkanäle zwischen dem walzenförmigen Abschnitt 24 und den gegenüberliegenden Wandabschnitten 18 geführten Luft erfolgt über die Klappen 40.

Fig. 1 zeigt eine Neutralstellung des Luftausströmers 10, wobei das Luftleitelement 20 nicht verschwenkt ist. Die Klappen 40 werden daher über die Lamellen 30 gegen die Wandabschnitte 18 gedrückt, sodass die Teilluftkanäle zwischen den Wandabschnitten 18 und dem walzenförmigen Abschnitt 24 maximal geöffnet bzw. nicht verschlossen sind. Zudem sind die Drosselklappen 50 nach außen verschwenkt, sodass der über die Lufteintrittsöffnung 14 zugeführte Luftstrom vollständig in den mittleren Abschnitt des Gehäuses 12 zugeführt werden kann. Einströmende Luft wird daher gleichmäßig in die beiden Teilluftkanäle geführt und strömt entlang des Luftleitelements 20. In der Neutralstellung wird die ausgegebene Luft nicht abgelenkt, sodass sich über die Luftaustrittsöffnung 16 ein im Wesentlichen geradliniger Luftstrom einstellt, wie durch die Pfeile schematisch angedeutet.

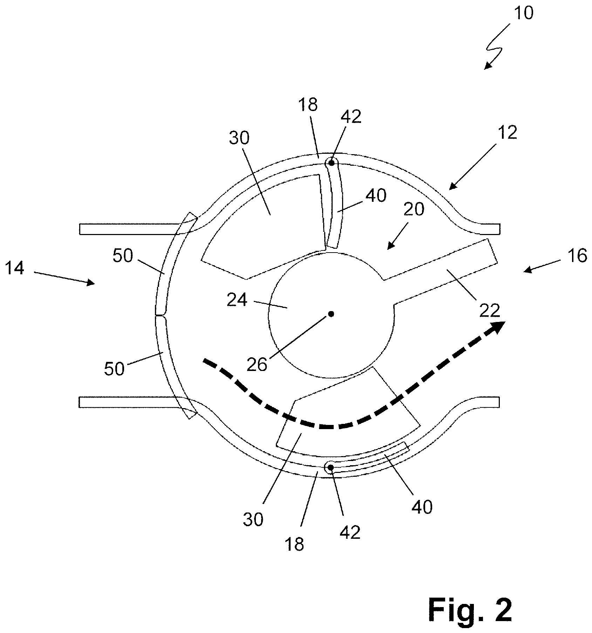

Fig. 2 zeigt eine weitere schematische Darstellung des Luftausströmers 10 mit einem verschwenkten Luftleitelement 20 und einer geschlossenen Lufteintrittsöffnung 14. Es sei angemerkt, dass eine Luftablenkung bei der in Fig. 2 gezeigten Stellung grundsätzlich nicht möglich ist, da die Drosselklappen 50 die Lufteintrittsöffnung 14 verschließen und damit keine Luftzufuhr möglich ist. Die Darstellung von Fig. 2 ist jedoch nur schematischer Natur, wobei zwei Zustände gleichzeitig gezeigt sind. Zum einen zeigt Fig. 2 die Ausbildung und Funktion der Drosselklappen 50, die gemeinsam aufeinander zubewegt werden können, um die Lufteintrittsöffnung 14 zu verschließen. Dies ist in Fig. 2 dargestellt. Fig. 2 zeigt zusätzlich auch einen schematisch angedeuteten Luftweg durch einen unteren Teilluftkanal bei einem verschwenkten Luftleitelement 20. Durch das Verschwenken des Luftleitelements 20 gelangen die oberen Lamellen 30 in einen hinteren Bereich, sodass die Lamellen 30 nicht mehr in Kontakt mit der oberen Klappe 40 stehen. Dadurch wird kein Druck mehr auf die Klappe 40 ausgeübt, sodass diese über die Federeinrichtung in den oberen Teilluftkanal gedrückt wird. Die obere Klappe 40 verschließt daher diesen Teilluftkanal. Einströmende Luft würde daher nicht in diesen Teilluftkanal gelangen, sondern lediglich über den unteren Teilluftkanal ausströmen.

Durch die gekrümmte Ausbildung der Wandabschnitte 18 und die Ausbildung des Luftleitelements 20 wird eine Luftablenkung erreicht, wie sie schematisch durch den Pfeil angedeutet ist. Das Verschwenken des Luftleitelements 20 kann über das in den Figuren nicht dargestellte Bedienelement erfolgen. Alternativ dazu kann auch der Griff 22 ergriffen und entsprechend bewegt werden, um ein Verschwenken des Luftleitelements 20 durchzuführen. Der Luftausströmer 10 ermöglicht eine intuitive Bedienung, wobei ein Anheben bzw. Verschwenken des Luftleitelements 20 nach oben automatische eine Luftablenkung nach oben bewirkt.

Bei dem Luftausströmer 10 ist zusätzlich eine seitliche Luftablenkung über die Lamellen 30 in hohem Maße möglich, da die Lamellen 30 sich auf Höhe des Luftleitelements 20 bzw. des walzenförmigen Abschnitts 24 befinden. Die Luftablenkung über die Lamellen 30 erfolgt daher nicht in einem abseits der Luftaustrittsöffnung 16 gelegenen Bereich sondern nahe der Luftaustrittsöffnung 16. Der Effekt der seitlichen Luftablenkung bleibt daher bestehen und wird durch die gezeigte Ausführung verbessert.

Wie insbesondere in Fig. 2 dargestellt, werden die Lamellen 30 der Gruppe von Lamellen durch ein Verschwenken des Luftleitelements 20 auch weiter in Richtung der Luftaustrittsöffnung 16 bewegt, die sich in dem Teilluftkanal befinden, über welchen die Luft ausgegeben wird.

Die Klappen 40 ermöglichen eine Drosselung des Luftstroms über die Teilluftkanäle zwischen dem Luftleitelement 20 und den Wandabschnitten 18. Die Figuren 1 und 2 zeigen eine Ausführungsform, welche sowohl eine Drosseleinrichtung mit Drosselklappen 50 als auch die Klappen 40 umfasst. Die Drosselklappen 50 dienen in erster Linie zur Regelung der Menge an zugeführter Luft und nicht zum Verschließen der Teilluftkanäle. Diese Funktion wird über die Klappen 40 übernommen. Die Klappen 40 können auch nur teilweise verschwenkt sein, wobei sich die Lamellen 30 durch ein Verschwenken des Luftleitelements 20 in entsprechenden Positionen befinden. Die Zwischenstellungen der Klappen 40 sind in den Figuren nicht dargestellt. Es ist jedoch offensichtlich, dass hierüber eine Drosselung eines Luftstroms über einen der Teilluftkanäle erfolgen kann. Hierdurch ergeben sich verschiedene Luftablenkungen. Die Ausbildung der Klappen 40 und deren schwenkbare Lagerung, wobei die Klappen 40 über die Lamellen 30 in Richtung der Luftaustrittsöffnung 16 gedrückt werden, bewirkt, dass bei einer Drosselung die Luft entlang der Flächen der Klappen 40 strömt und in Richtung des Luftleitelement 20 geleitet wird.

Wie in den Figuren gezeigt, kann ein geringer Abstand zwischen dem walzenförmigen Abschnitt 24 und den gegenüberliegenden Kanten der Klappen 40 auch in einem verschlossenen Zustand eines Teilluftkanals bestehen, wodurch störende Geräusche (z. B. Pfeifen) verhindert oder minimiert werden. Geringe Luftströme haben keinen Einfluss auf die Luftablenkung und sind daher tolerierbar.

Die Ausbildung der Lamellen 30 ist maßgeblich für das Maß, um welches die Klappen 40 in den jeweiligen Stellungen verschwenkt werden. Daher sind die Klappen 40 sowie die Lamellen 30 stets auf die Ausbildung des Gehäuses 12 und des Luftleitelements 20 abzustimmen, damit in maximalen Ablenkstellungen ein Verschließen der entsprechenden Teilluftkanäle möglich ist und Zwischenstellungen der Klappen 40 bei entsprechend verschwenkten Luftleitelementen 20 erreicht werden können, um eine Luftablenkung nach oben und unten zu erreichen. Bei Ausführungen mit gedrehten Luftausströmern 10 kann selbstverständlich die Luftablenkung auch seitlich über das Luftleitelement 20 erfolgen, wobei die Lamellen 30 dann eine Luftablenkung nach oben und unten bewirken.

Der Luftausströmer 10 ermöglicht eine deutlich verbesserte seitliche Luftablenkung über die Lamellen 30, da diese direkt am Luftleitelement 20 gelagert sind. Die Luftablenkung wird zusätzlich durch ein entsprechendes Drosseln der Luftströme in den Teilluftkanälen geregelt, wobei die Lamellen 30 automatisch regeln, in wie weit die Klappen 40 die Teilluftkanäle versperren. Hierdurch wird ein sehr einfach ausgebildeter Luftausströmer 10 bereitgestellt, der zusätzlich nur einen geringen Bauraum benötigt.

### Bezugszeichenliste

- 10: Luftausströmer
- 12: Gehäuse
- 14: Lufteintrittsöffnung
- 16: Luftaustrittsöffnung
- 18: Wandabschnitt
- 20: Luftleitelement
- 22: Griff
- 24: walzenförmiger Abschnitt
- 26: Drehachse
- 30: Lamelle
- 40: Klappe
- 42: Schwenkachse
- 50: Drosselklappe

## Patentansprüche

1. Luftausströmer aufweisend ein Gehäuse (12) mit einer Lufteintrittsöffnung (14) und einer Luftaustrittsöffnung (16), ein im Gehäuse (12) drehbar gelagertes Luftleitelement (20), eine erste Gruppe von Lamellen (30) und eine zweite Gruppe von Lamellen (30), wobei
- die Lamellen (30) der ersten Gruppe von Lamellen (30) und die Lamellen (30) der zweiten Gruppe von Lamellen (30) gegenüberliegend und verschwenkbar am Luftleitelement (20) gelagert sind, **dadurch gekennzeichnet, dass** zwischen dem Luftleitelement (20) und gegenüberliegenden Wandabschnitten (18) des Gehäuses (12) Teilluftkanäle gebildet sind,
- an den gegenüberliegenden Wandabschnitten (18) des Gehäuses (12) verschwenkbar gelagerte Klappen (40) angeordnet sind, und
- die Klappen (40) gefedert gelagert und über die Lamellen (30) der ersten Gruppe von Lamellen (30) und die Lamellen (30) der zweiten Gruppe von Lamellen (30) gegen die Wandabschnitte (18) verschwenkbar sind, sodass
- eine Drosselung der über die Teilluftkanäle zwischen dem Luftleitelement (20) und den gegenüberliegenden Wandabschnitten (18) des Gehäuses (12) geführten Luft über die Klappen (40) erfolgen kann.

2. Luftausströmer nach Anspruch 1, wobei die gegenüberliegenden Wandabschnitte (18) Aufnahmen für die Klappen (40) aufweisen.

3. Luftausströmer nach Anspruch 1 oder 2, wobei die Klappen (40) über eine Feder vorgespannt sind.

4. Luftausströmer nach einem der Ansprüche 1 bis 3, wobei die Schwenkachsen (42) der Klappen (40) im Wesentlichen auf Höhe der Drehachse (26) des Luftleitelements (20) liegen.

5. Luftausströmer nach einem der Ansprüche 1 bis 4, wobei die Lamellen (30) der ersten Gruppe von Lamellen (30) und die Lamellen (30) der zweiten Gruppe von Lamellen (30) und/oder die Klappen (40) eine dem Verlauf der Wandabschnitte (18) angepasste Form aufweisen.

6. Luftausströmer nach einem der Ansprüche 1 bis 5, wobei die Klappen (40) über die Lamellen (30) der ersten Gruppe von Lamellen (30) und die Lamellen (30) der zweiten Gruppe von Lamellen (30) in Richtung der Luftaustrittsöffnung (16) verschwenkbar sind.

7. Luftausströmer nach einem der Ansprüche 1 bis 6, wobei das Luftleitelement (20) keulenförmig oder walzenförmig ausgebildet ist.

8. Luftausströmer nach einem der Ansprüche 1 bis 7, wobei das Luftleitelement (20) einen über die Luftaustrittsöffnung (16) zugänglichen Griff (22) aufweist.

9. Luftausströmer nach Anspruch 8, wobei sich der Griff (22) über die Länge des Luftleitelements (20) hinweg erstreckt und als Luftleitfläche ausgebildet ist.

10. Luftausströmer nach einem der Ansprüche 1 bis 9, wobei im Bereich der Lufteintrittsöffnung (14) des Gehäuses (12) eine Drosseleinrichtung angeordnet ist, welche zwei verschwenkbare Drosselklappen (50) aufweist, die zum Verschließen der Lufteintrittsöffnung (14) bis in Berührungsanlage gegeneinander bewegbar und die zum Öffnen der Lufteintrittsöffnung (14) voneinander wegbewegbar sind.

## Claims

1. Air vent comprising a housing (12) with an air inlet opening (14) and an air outlet opening (16), an air guide element (20) rotatably mounted in the housing (12), a first group of slats (30) and a second group of slats (30), wherein
- the slats (30) of the first group of slats (30) and the slats (30) of the second group of slats (30) are arranged oppositely and pivotably at the air guide element (20),
**characterised in that** part air channels are formed between the air guide element (20) and opposite wall sections (18) of the housing (12),
- pivotably mounted flaps (40) are arranged at the opposite wall sections (18) of the housing (12) and
- the flaps (40) are resiliently mounted and are pivotable by way of the slats (30) of the first group of slats (30) and the slats (30) of the second group of slats (30) relative to the wall sections (18) so that
- a throttling of the air guided by way of the part air channels between the air guide element (20) and the opposite wall sections (18) of the housing (12) can take place by way of the flaps (40).

2. Air vent according to claim 1, wherein the opposite wall sections (18) have mounts for the flaps (40).

3. Air vent according to claim 1 or 2, wherein the flaps (40) are biased by way of a spring.

4. Air vent according to any one of claims 1 to 3, wherein the pivot axes (42) of the flaps (40) lie substantially at the height of the axis (26) of rotation of the air guide element (20).

5. Air vent according to any one of claims 1 to 4, wherein the slats (30) of the first group of slats (30) and the slats of the second group of slats (30) and/or the flaps (40) have a shape adapted to the course of the wall sections (18).

6. Air vent according to any one of claims 1 to 5, wherein the flaps (40) are pivotable by way of the slats (30) of the first group of slats (30) and the slats (30) of the second group of slats (30) in the direction of the air outlet opening (16).

7. Air vent according to any one of claims 1 to 6, wherein the air guide element (20) is of lobe-shaped or roller-shaped construction.

8. Air vent according to any one of claims 1 to 7, wherein the air guide element (20) has a grip (22) accessible via the air outlet opening (16).

9. Air vent according to claim 8, wherein the grip (22) extends over the length of the air guide element (20) and is constructed as an air guide surface.

10. Air vent according to any one of claims 1 to 9, wherein a throttle device is arranged in the region of the air inlet opening (14) of the housing (12) and comprises two pivotable throttle flaps (50), which for closing the air inlet opening (14) are movable relative to one another until in a contacting position and which for opening the air inlet opening (14) are movable away from one another.

## Revendications

1. Diffuseur d'air présentant un boîtier (12) avec une ouverture d'entrée d'air (14) et une ouverture de sortie d'air (16), un élément d'acheminement d'air (20) monté de manière à pouvoir tourner dans le boîtier (12), un premier groupe de lamelles (30) et un deuxième groupe de lamelles (30), dans lequel
- les lamelles (30) du premier groupe de lamelles (30) et les lamelles (30) du deuxième groupe de lamelles (30) sont montées de manière à se faire face et de manière à pouvoir pivoter au niveau de l'élément d'acheminement d'air (20), **caractérisé en ce que** des canaux d'air partiels sont formés entre l'élément d'acheminement d'air (20) et des portions de paroi (18) du boîtier (12) se faisant face,
- des clapets (40) montés de manière à pouvoir pivoter sont disposés au niveau des portions de paroi (18) du boîtier (12) se faisant face, et
- les clapets (40) sont montés de manière élastique et peuvent pivoter contre les portions de paroi (18) par l'intermédiaire des lamelles (30) du premier groupe de lamelles (30) et des lamelles (30) du deuxième groupe de lamelles (30), si bien
- qu'un étranglement de l'air guidé par l'intermédiaire des canaux d'air partiels entre l'élément d'acheminement d'air (20) et les portions de paroi (18) du boîtier (12) se faisant face peut être effectué par l'intermédiaire des clapets(40).

2. Diffuseur d'air selon la revendication 1, dans lequel les portions de paroi (18) se faisant face présentent des logements pour les clapets (40).

3. Diffuseur d'air selon la revendication 1 ou 2, dans lequel les clapets (40) sont précontraints par l'intermédiaire d'un ressort.

4. Diffuseur d'air selon l'une quelconque des revendications 1 à 3, dans lequel les axes de pivotement (42) des clapets (40) se situent sensiblement à hauteur de l'axe de rotation (26) de l'élément d'acheminement d'air (20).

5. Diffuseur d'air selon l'une quelconque des revendications 1 à 4, dans lequel les lamelles (30) du premier groupe de lamelles (30) et les lamelles (30) du deuxième groupe de lamelles (30) et/ou les clapets (40) présentent une forme adaptée au profil des portions de paroi (18).

6. Diffuseur d'air selon l'une quelconque des revendications 1 à 5, dans lequel les clapets (40) peuvent pivoter par l'intermédiaire des lamelles (30) du premier groupe de lamelles (30) et des lamelles (30) du deuxième groupe de lamelles (30) en direction de l'ouverture de sortie d'air (16).

7. Diffuseur d'air selon l'une quelconque des revendications 1 à 6, dans lequel l'élément d'acheminement d'air (20) est réalisé en forme de massue ou en forme de cylindre.

8. Diffuseur d'air selon l'une quelconque des revendications 1 à 7, dans lequel l'élément d'acheminement d'air (20) présente une poignée (22) accessible par l'intermédiaire de l'ouverture de sortie d'air (16).

9. Diffuseur d'air selon la revendication 8, dans lequel la poignée (22) s'étend au-delà de la longueur de l'élément d'acheminement d'air (20) et est réalisée sous la forme d'une surface d'acheminement d'air.

10. Diffuseur d'air selon l'une quelconque des revendications 1 à 9, dans lequel un dispositif d'étranglement est disposé dans la zone de l'ouverture d'entrée d'air (14) du boîtier (12), lequel présente deux clapets d'étranglement (50) pouvant pivoter, qui peuvent être déplacés l'un à l'encontre de l'autre pour fermer l'ouverture d'entrée d'air (14) jusque dans un appui de contact et qui peuvent être éloignées l'une de l'autre pour ouvrir l'ouverture d'entrée d'air (14).
